# EUROPEAN PATENT APPLICATION

(11) **EP 4 175 192 A1**
(43) Date of publication of application: **03.05.2023**
(21) Application number: 22202232.9
(22) Date of filing: 18.10.2022
(51) Int. Cl.: H04B 7/06, H04B 7/08

(54) **APPARATUS AND METHOD FOR BEAM FAILURE RECOVERY IN MOBILE COMMUNICATIONS**

(30) Priority: 27.10.2021 US 202163272348 P; 01.11.2021 US 202163274034 P; 02.10.2022 US 202217958426
(71) Applicant: MediaTek Inc., Hsinchu City 30078 (TW)
(72) Inventor: TSAI, Cheng-Rung, Hsinchu City 30078 (TW)
(74) Representative: Hoefer & Partner Patentanwälte mbB

(57) **Abstract**

Apparatus and method for beam failure recovery, BFR, are proposed. The network node may allocate channel state information-reference signal, CSI, configuration for the user equipment, UE. The CSI configuration may comprise at least one CSI-reference signal, CSI-RS, associated with a serving transmission configuration indication, TCI, for the UE. In addition, the network node may transmit the CSI configuration to the UE (310). The UE may perform BFD procedure to determine whether a beam failure happens and transmit a beam failure recovery, BFR, request to the network node when the beam failure happens (320). In addition, the UE may perform operations based on the CSI-RS associated with the serving TCI when the UE receives a response from the network node for the BFR request (330).

## Description

### CROSS REFERENCE TO RELATED APPLICATIONS

This application claims priority under 35 U.S.C. §119 from U.S. Provisional Application Number 63/272,348, entitled "BFR for Joint and Separate TCI Modes", filed on October 27, 2021 and from U.S. Provisional Application Number 63/274,034, entitled "BFR for Joint and Separate TCI Modes", filed on November 01, 2021, the subject matter of which is incorporated herein by reference.

### TECHNICAL FIELD

The disclosed embodiments relate generally to wireless communication, and, more particularly, to channel state information-reference signal (CSI-RS) associated with serving transmission configuration indication (TCI) in mobile communications.

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board, has decided to focus the future NGMN activities on defining the end-to-end requirements for 5G new radio (NR) systems.

In conventional 5G technology, beam failure recovery (BFR) procedure is proposed to handle beam tracking issues, e.g., feedback rate for determined channel state may not be frequent enough or sudden blockage results in lost connection. Furthermore, in conventional 5G technology, the serving transmission configuration indication (TCI) is applied to at least UE-dedicated physical downlink control channel (PDCCH) reception and UE-dedicated physical downlink shared channel (PDSCH) reception.

After UE receives a response for the BFR request from the network node, the operations of UE associated with a new beam may be worthy of further discussion.

### SUMMARY

Apparatus and method for beam failure recovery (BFR) are proposed. In the proposed methods, the network node may allocate channel state information (CSI) configuration for the user equipment (UE). The CSI configuration may comprise at least one CSI-reference signal (CSI-RS) associated with a serving transmission configuration indication (TCI) for the UE. In addition, the network node may transmit the CSI configuration to the UE. The UE may perform BFD procedure to determine whether a beam failure happens and transmit a beam failure recovery (BFR) request to the network node when the beam failure happens. In addition, the UE may perform operations based on the CSI-RS associated with the serving TCI when the UE receives a response from the network node for the BFR request. Methods and a UE according to the invention are defined in the independent claims. The dependent claims define preferred embodiments thereof.

In one embodiment, a user equipment (UE) receives a configuration of at least one channel state information-reference signal (CSI-RS). The UE transmits a beam failure recovery (BFR) request to the network node in an event that a BFR is triggered. The UE receives a response for the BFR request from the network node. In addition, the UE receives the at least one CSI-RS by using antenna port quasi-co-location (QCL) parameters the same as the antenna port QCL parameters associated with a new beam reference signal (RS) from the network node. The configuration of the at least one CSI-RS may indicate that the at least one CSI-RS is quasi co-located with reference signals in a serving transmission configuration indication (TCI).

In another embodiment, a network node transmits a configuration of at least one channel state information-reference signal (CSI-RS) to a user equipment (UE). The network node receives a beam failure recovery (BFR) request from the UE in an event that a BFR is triggered. Then, the network node transmits a response for the BFR request to the UE. In addition, the network node transmits the at least one CSI-RS by using antenna port quasi-co-location (QCL) parameters the same as the antenna port QCL parameters associated with a new beam reference signal (RS) to the UE. The configuration of the at least one CSI-RS may indicate that the at least one CSI-RS is quasi co-located with reference signals in a serving transmission configuration indication (TCI).

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates an exemplary 5G new radio (NR) network 100 in accordance with aspects of the current invention.
Figure 2 is a simplified block diagram of a network node and a user equipment that carry out certain embodiments of the present invention.
Figure 3 illustrates a procedure for beam failure recovery (BFR) in accordance with one novel aspect.
Figure 4 is a flow chart of a method for beam failure recovery (BFR) in accordance with one novel aspect.
Figure 5 is a flow chart of a method for beam failure recovery (BFR) in accordance with another novel aspect.

### DETAILED DESCRIPTION

Reference will now be made in detail to some embodiments of the invention, examples of which are illustrated in the accompanying drawings.

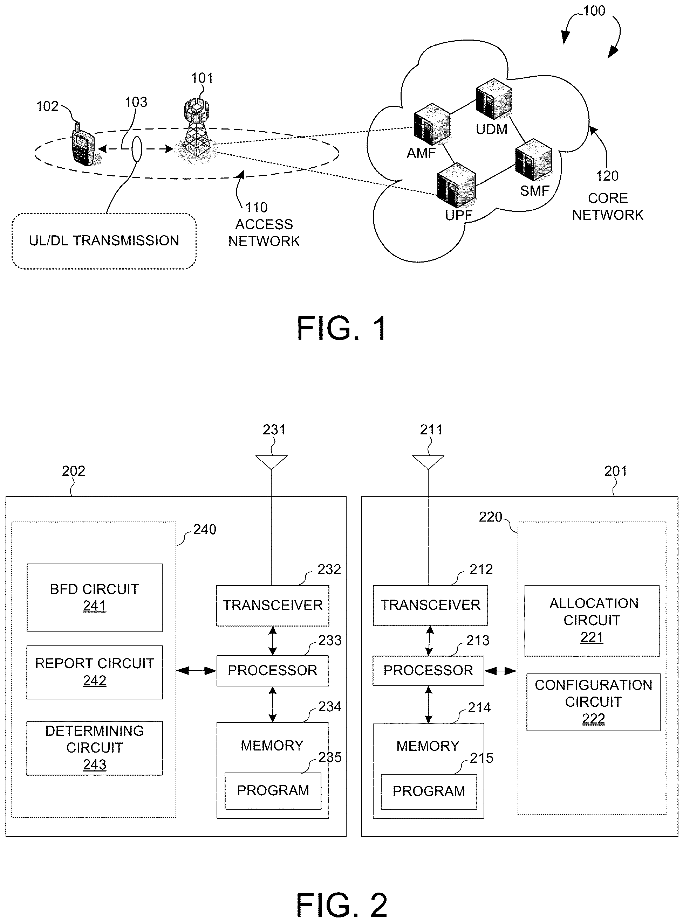

Figure 1 illustrates an exemplary 5G new radio (NR) network 100 in accordance with aspects of the current invention. The 5G NR network 100 comprises a network node 101 communicatively connected to a user equipment (UE) 102 operating in a licensed band (e.g., 30GHz~300GHz for mmWave) of an access network 110 which provides radio access using a Radio Access Technology (RAT) (e.g., the 5G NR technology). The access network 110 is connected to a 5G core network 120 by means of the NG interface, more specifically to a User Plane Function (UPF) by means of the NG user-plane part (NG-u), and to a Mobility Management Function (AMF) by means of the NG control-plane part (NG-c). One gNB can be connected to multiple UPFs/AMFs for the purpose of load sharing and redundancy. The network node 101 may be a gNB. The UE 102 may be a smart phone, a wearable device, an Internet of Things (IoT) device, and a tablet, etc. Alternatively, UE 110 may be a Notebook (NB) or Personal Computer (PC) inserted or installed with a data card which includes a modem and RF transceiver(s) to provide the functionality of wireless communication.

The network node 101 may provide communication coverage for a geographic coverage area in which communications with the UE 102 is supported via a communication link 103. The communication link 103 between the network node 101 and the UE 102 may utilize one or more frequency carriers to form one or more cells (e.g., a PCell and one or more Scells). The communication link 103 shown in the 5G NR network 100 may include uplink transmissions from the UE 102 to the network node 101 (e.g., on the Physical Uplink Control Channel (PUCCH) or Physical Uplink Shared Channel (PUSCH)) or downlink transmissions from the network node 101 to the UE 102 (e.g., on the Physical Downlink Control Channel (PDCCH) or Physical Downlink Shared Channel (PDSCH)).

In accordance with one novel aspect, the UE 102 may receive a configuration of at least one channel state information-reference signal (CSI-RS) the network node 101. The configuration of at least one CSI-RS indicates that the at least one CSI-RS is quasi co-located with reference signals in a serving transmission configuration indication (TCI). In an example, the UE 102 may receive the configuration of the CSI-RS associated with the serving TCI through a radio resource control (RRC) signaling.

The serving TCI is used for a physical downlink control channel (PDCCH) reception and a physical downlink shared channel (PDSCH) reception. In accordance with one novel aspect, the CSI-RS associated with the serving TCI is configured to the UE 102 to share the same port quasi-co-location (QCL) parameters as the UE-dedicated PDCCH reception and the PDSCH reception. In addition, the CSI-RS associated with the serving TCI does not comprise QCL information. That is to say, the CSI-RS associated with the serving TCI may be a specific CSI-RS which is configured to share the same QCL parameters as the PDCCH reception and the PDSCH reception, but the CSI-RS associated with the serving TCI does not provide any information of other QCL parameters.

The UE 102 may perform BFD procedure to determine whether a beam failure happens. When the beam failure happens, the UE 102 may trigger the bean failure recovery (BFR) procedure. When a BFR procedure is triggered, the UE 102 may transmit a beam failure recovery (BFR) request to the network node 101. The BFR request may comprise at least one of a physical random access channel (PRACH) transmission, physical uplink control channel (PUCCH) transmission with scheduling request (SR) and a BFR medium access control-control element (MAC-CE) which is transmitted on a first physical uplink shared channel (PUSCH).

The network node 101 may transmit a response for the BFR request from the UE 102. The response may comprise at least one of a downlink control information (DCI) with cyclic redundancy check (CRC) scrambled by cell-radio network temporary identifier (C-RNTI) or modulation coding scheme-cell-RNTI (MCS-C-RNTI) transmitted on PDCCH in a specific search space set, and a DCI scheduling a second PUSCH with the same hybrid automatic repeat request (HARQ) process number as for the first PUSCH and having a toggled new data indicator (NDI) field value.

In accordance with one novel aspect, after the UE 102 receives the response for the BFR request from the network node 101, the UE 102 may receive the CSI-RS associated with the serving TCI by using the antenna QCL parameters the same as the antenna port QCL parameters associated with a new beam reference signal (RS). The new beam RS may be identified or selected by the UE 102 from a set of candidate beam RSs during the new beam identification (NBI) procedure of the BFR procedure.

In accordance with one novel aspect, the UE 102 may further receive a sounding reference signal (SRS) configured by the network node 101. The SRS is configured by the network node 101 to use a same spatial domain filter associated with the serving TCI. The SRS is configured to share the same uplink spatial filter as physical uplink control channel (PUSCH) transmission and physical uplink control channel (PUCCH) resources. The UE 102 may transmit the SRS by using a spatial domain filter which is the same as the spatial domain filter associated with the new beam RS.

In accordance with one novel aspect, the UE 102 may further receive a configuration of a set of cells for common TCI-State update from the network node 101. Therefore, the configuration of the CSI-RS associated with the serving TCI may be configured in the set of configured cells. That is to say, the CSI-RS associated with the serving TCI is configured to share the same QCL parameters as the PDCCH reception and the PDSCH reception in the set of configured cells. After the UE 102 receives the response for the BFR request from the network node 101, the UE 102 may receive the CSI-RS (associated with the serving TCI) by using the antenna QCL parameters the same as the antenna port QCL parameters associated with a new beam RS in the set of configured cells. In an example, the set of configured cells may be configured in the same band.

Figure 2 is a simplified block diagram of a network node and a user equipment (UE) that carry out certain embodiments of the present invention. The network node 201 may be a base station (BS) or a gNB, but the present invention should not be limited thereto. The UE 202 may be a smart phone, a wearable device, an Internet of Things (IoT) device, and a tablet, etc. Alternatively, UE 202 may be a Notebook (NB) or Personal Computer (PC) inserted or installed with a data card which includes a modem and RF transceiver(s) to provide the functionality of wireless communication.

Network node 201 has an antenna array 211 having multiple antenna elements that transmits and receives radio signals, one or more RF transceiver modules 212, coupled with the antenna array 211, receives RF signals from antenna array 211, converts them to baseband signal, and sends them to processor 213. RF transceiver 212 also converts received baseband signals from processor 213, converts them to RF signals, and sends out to antenna array 211. Processor 213 processes the received baseband signals and invokes different functional modules 220 to perform features in network node 201. Memory 214 stores program instructions and data 215 to control the operations of network node 201. Network node 201 also includes multiple function modules that carry out different tasks in accordance with embodiments of the current invention.

Similarly, UE 202 has an antenna array 231, which transmits and receives radio signals. A RF transceiver 232, coupled with the antenna, receives RF signals from antenna array 231, converts them to baseband signals and sends them to processor 233. RF transceiver 232 also converts received baseband signals from processor 233, converts them to RF signals, and sends out to antenna array 231. Processor 233 processes the received baseband signals and invokes different functional modules 240 to perform features in UE 202. Memory 234 stores program instructions and data 235 to control the operations of UE 202. UE 202 also includes multiple function modules and circuits that carry out different tasks in accordance with embodiments of the current invention.

The functional modules and circuits 220 and 240 can be implemented and configured by hardware, firmware, software, and any combination thereof. The function modules and circuits 220 and 240, when executed by the processors 213 and 233 (e.g., via executing program codes 215 and 235), allow network node 201 and UE 202 to perform embodiments of the present invention.

In the example of Figure 1, the network node 201 may comprise an allocation circuit 221 and a configuration circuit 222. Allocation circuit 121 may allocate CSI configuration for the UE 202. The CSI configuration may comprise at least one CSI-RS associated with a serving transmission configuration indication (TCI) for the UE 202. Configuration circuit 222 may transmit the CSI configuration to the UE 202.

In the example of Figure 1, the UE 202 may comprise a beam failure detection (BFD) circuit 241, a report circuit 242 and a determining circuit 243. BFD circuit 241 may perform BFD procedure to determine whether a beam failure happens. Report circuit 242 may transmit a beam failure recovery (BFR) request to the network node when the BFD circuit 241 determines that a beam failure happens. Determining circuit 243 may perform operations based on the CSI-RS associated with the serving TCI when the UE 202 receive a response for the BFR request from the network node 201.

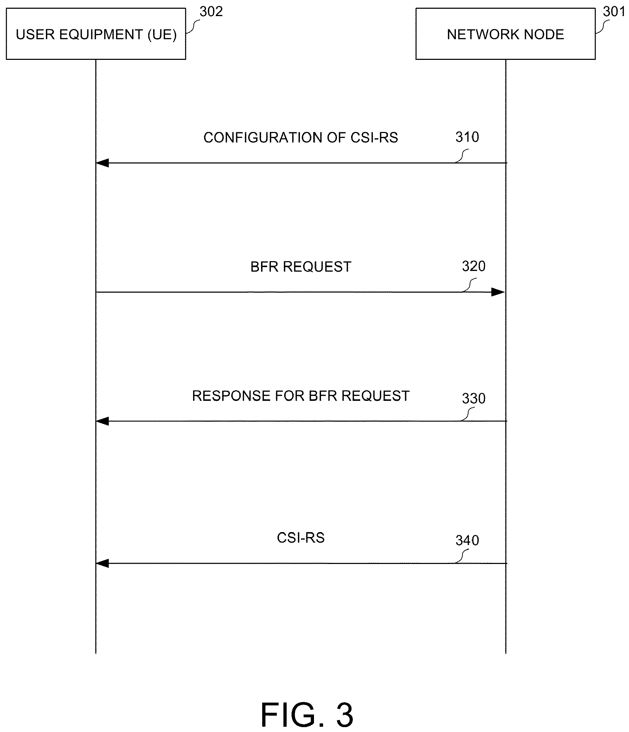

Figure 3 illustrates a procedure for beam failure recovery (BFR) in accordance with one novel aspect. Initially, in step 310, the network node 301 transmits a configuration of at least one channel state information-reference signal (CSI-RS) to the UE 302. In an example, the configuration of the at least one CSI-RS indicates that the at least one CSI-RS is quasi co-located with reference signals in a serving transmission configuration indication (TCI) .

In step 320, the UE 302 transmits a beam failure recovery (BFR) request to the network node 301 in an event that a BFR is triggered.

In step 330, the network node 301 transmits a response for the BFR request to the UE 302.

In step 340, the UE 302 receives the at least one CSI-RS by using antenna port quasi-co-location (QCL) parameters the same as the antenna port QCL parameters associated with a new beam reference signal (RS) from the network node 301.

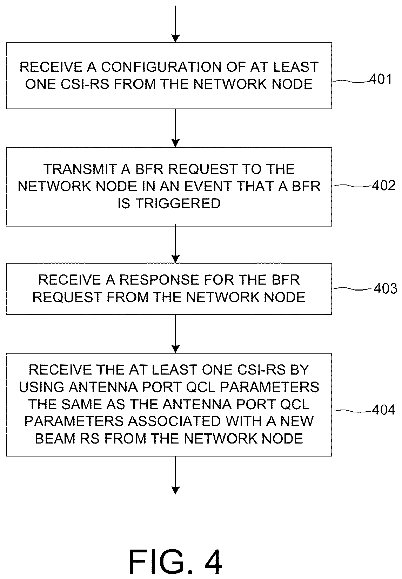

Figure 4 is a flow chart of a method for beam failure recovery (BFR) in accordance with one novel aspect. In step 401, the UE 102 receives a configuration of at least one channel state information-reference signal (CSI-RS) from the network node 101. In an example, the configuration of the at least one CSI-RS indicates that the at least one CSI-RS is quasi co-located with reference signals in a serving transmission configuration indication (TCI).

In step 402, the UE 102 transmits a beam failure recovery (BFR) request to the network node 101 in an event that a BFR is triggered.

In step 403, the UE 102 receives a response for the BFR request from the network node 101.

In step 404, the UE 102 receives the at least one CSI-RS by using antenna port quasi-co-location (QCL) parameters the same as the antenna port QCL parameters associated with a new beam reference signal (RS) from the network node.

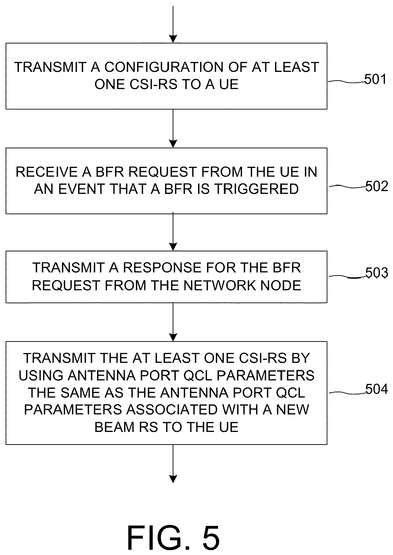

Figure 5 is a flow chart of a method for beam failure recovery (BFR) in accordance with another novel aspect. In step 501, the network node 101 transmits a configuration of at least one channel state information-reference signal (CSI-RS) to the UE 102. In an example, the configuration of the at least one CSI-RS indicates that the at least one CSI-RS is quasi co-located with reference signals in a serving transmission configuration indication (TCI) .

In step 502, the network node 101 receives a beam failure recovery (BFR) request from the UE in an event that a BFR is triggered.

In step 503, the network node 101 transmits a response for the BFR request to the UE 102.

In step 504, the network node 101 transmits the at least one CSI-RS by using antenna port quasi-co-location (QCL) parameters the same as the antenna port QCL parameters associated with a new beam reference signal (RS) to the UE.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
receiving, by a user equipment, in the following also referred to as UE, a configuration of at least one channel state information-reference signal, in the following also referred to as CSI-RS, from a network node (310; 401);
transmitting, by the UE, a beam failure recovery, in the following also referred to as BFR, request to the network node in an event that a BFR is triggered (320; 402);
receiving, by the UE, a response for the BFR request from the network node (330; 403); and
receiving, by the UE, the at least one CSI-RS by using antenna port quasi-co-location, in the following also referred to as QCL, parameters the same as the antenna port QCL parameters associated with a new beam reference signal, in the following also referred to as RS, from the network node (340; 404).

2. The method of Claim 1, wherein the configuration of the at least one CSI-RS is received through a radio resource control, in the following also referred to as RRC, signaling.

3. The method of Claim 1 or 2, wherein the configuration of the at least one CSI-RS indicates that the at least one CSI-RS is quasi co-located with reference signals in a serving transmission configuration indication, in the following also referred to as TCI.

4. The method of Claim 3, wherein the serving TCI is used for a physical downlink control channel, in the following also referred to as PDCCH, reception and a physical downlink shared channel, in the following also referred to as PDSCH, reception.

5. The method of any one of Claims 1 to 4, wherein the new beam RS is identified by the UE from a set of candidate beam RSs.

6. The method of any one of Claims 1 to 5, wherein the configuration of the at least one CSI-RS does not comprise QCL information.

7. The method of any one of Claims 1 to 6, further comprising:
transmitting, by the UE, a sounding reference signal, in the following also referred to as SRS, by using a spatial domain filter which is the same as the spatial domain filter associated with the new beam RS to the network node, wherein the SRS is configured by the network node to use a same spatial domain filter associated with a serving TCI.

8. A method, comprising:
transmitting, by a network node, a configuration of at least one channel state information-reference signal, in the following also referred to as CSI-RS, to a user equipment, in the following also referred to as UE, (310; 501);
receiving, by the network node, a beam failure recovery, in the following also referred to as BFR, request from the UE in an event that a BFR is triggered (320; 502);
transmitting, by the network node, a response for the BFR request to the UE (330; 503); and
transmitting, by the network node, the at least one CSI-RS by using antenna port quasi-co-location, in the following also referred to as QCL, parameters the same as the antenna port QCL parameters associated with a new beam reference signal, in the following also referred to as RS, to the UE (340; 504).

9. The method of Claim 8, wherein the configuration of the at least one CSI-RS is transmitted through a radio resource control, in the following also referred to as RRC, signaling; and/or
wherein the configuration of the at least one CSI-RS indicates that the at least one CSI-RS is quasi co-located with reference signals in a serving transmission configuration indication, in the following also referred to as TCI,
wherein preferably the serving TCI is used for a physical downlink control channel, in the following also referred to as PDCCH, reception and a physical downlink shared channel, in the following also referred to as PDSCH, reception.

10. The method of Claim 8 or 9, wherein the at least one CSI-RS does not comprise QCL information.

11. The method of any one of Claims 8 to 10, further comprising:
receiving, by the network node, a sounding reference signal, in the following also referred to as SRS, by using a spatial domain filter which is the same as the spatial domain filter associated with the new beam RS from the UE, wherein the SRS is configured by the network node to use a same spatial domain filter associated with a serving TCI.

12. A user equipment, in the following also referred to as UE, (202), comprising:
a receiver (232), receiving a configuration of at least one channel state information-reference signal, in the following also referred to as CSI-RS, from a network node and receiving a response for a beam failure recovery, in the following also referred to as BFR, request from the network node; and
a transmitter (232), transmitting the BFR request to the network node in an event that a BFR is triggered;
wherein the receiver (232) receives the at least one CSI-RS by using antenna port quasi-co-location, in the following also referred to as QCL, parameters the same as the antenna port QCL parameters associated with a new beam reference signal, in the following also referred to as RS, from the network node.

13. The UE (202) of Claim 12, wherein the receiver (232) receives the configuration of the at least one CSI-RS through a radio resource control, in the following also referred to as RRC, signaling; and/or
wherein the configuration of the at least one CSI-RS indicates that the at least one CSI-RS is quasi co-located with reference signals in a serving transmission configuration indication, in the following also referred to as TCI,
wherein preferably the serving TCI is used for a physical downlink control channel, in the following also referred to as PDCCH, reception and a physical downlink shared channel, in the following also referred to as PDSCH, reception; and/or
wherein the configuration of the at least one CSI-RS does not comprise QCL information.

14. The UE of Claim 12 or 13, further comprises:
a processor, identifying the new beam RS from a set of candidate beam RSs.

15. The UE of any one of Claims 12 to 14, wherein the transmitter further transmits a sounding reference signal, in the following also referred to as SRS, by using a spatial domain filter which is the same as the spatial domain filter associated with the new beam RS to the network node, wherein the SRS is configured by the network node to use a same spatial domain filter associated with a serving TCI.
